# EUROPEAN PATENT SPECIFICATION

(11) **EP 1 826 063 B1**
(45) Date of publication and mention of the grant of the patent: **24.03.2010**
(21) Application number: 07103232.0
(22) Date of filing: 28.02.2007
(51) Int. Cl.: B60R 3/02, B61D 23/02, A61G 3/06

(54) **Transport vehicle equipped with access device for persons with reduced mobility**
Transportfahrzeug mit Zugangsvorrichtung für Personen mit eingeschränkter Mobilität
Véhicule de transport équipé d'un dispositif d'accès pour les personnes à mobilité réduite

(30) Priority: 28.02.2006 FR 0601760
(43) Date of publication of application: 29.08.2007
(73) Proprietor: Iveco France S.A., 69200 Vénissieux (FR)
(72) Inventor: Desneux, Alexandre, 38460 Chamagnieu (FR)
(74) Representative: Borsano, Corrado

(56) References cited:
- EP-A- 0 913 307
- DE-A1- 19 531 284
- DE-U1- 9 401 755
- FR-A- 2 229 595
- FR-A- 2 654 999
- PATENT ABSTRACTS OF JAPAN vol. 015, no. 168 (M-1107), 26 April 1991 (1991-04-26) & JP 03 032948 A (HITACHI LTD; others: 01), 13 February 1991 (1991-02-13)

## Description

The present invention concerns a transport vehicle equipped with a device for accessing the vehicle for persons with reduced mobility

The invention is aimed at all types of transport vehicle whose route involves at least one station stop, during which people are likely to board the vehicle, and also to alight from it. It is aimed at such a vehicle, which may or may not be driven in a dedicated lane, in particular by means of electric wires, of rails or even by optical means.

This type of transport vehicle typically includes a chassis mounted on at least one axle having bearing devices which are generally wheels with rubber tyres. In these conditions, transport vehicles in the sense of the invention include in particular, but not exclusively, buses and also trolleybuses.

More specifically, this invention aims to improve the use of such a vehicle by persons with reduced mobility. The latter are notably persons who move around with the aid of a wheelchair.

In a known manner, such persons with reduced mobility can access the vehicle by means of a retractable system made up of various stowable plates. When the vehicle makes a scheduled stop, the system is opened so that the plates extend out towards the platform so that the aforesaid persons can get on or off.

This known solution has certain disadvantages, however.

Indeed, it is understood that, if the vehicle is not driven with particular care, the distance separating the side edge of the vehicle from the platform can vary considerably, from one stop to another. In fact, the retractable system described above is not adapted to different sized gaps between the side edge and the platform. In such conditions, when the vehicle makes a scheduled stop, it is necessary for the driver to firstly ensure that said retractable system can be opened, before proceeding with the operation if the need arises.

Indeed, if the driver does not carry out this check, when opened the retractable system could leave a gap between the vehicle and the platform, which is dangerous, or could cause a collision between the retractable system and the platform, which could cause a material breakage.

Note that this problem could be solved by using a very precise system for driving the transport vehicle, whereby its distance from the platform or kerb is practically unvarying, when it makes different scheduled stops. However, it is understood that this alternative solution is particularly complex and consequently leads to very high costs.

EP 0 913 307 describes an access device for a transport vehicle according to the preamble of claim 1, comprising a slidable platform, hinged at its extremity to that of a L shaped arm, hinged at its opposite extremity to the chassis and connected to an actuator that may be of different kinds. The system is very bulky, both in its retracted and opened position.

FR 2 229 595 describes a retractable platform for a vehicle placed beneath a series of steps. Also this device is bulky and of complex construction.

This having been specified, the invention aims to find a solution for the various disadvantages of the prior art as described above. In particular, it aims to propose a transport vehicle equipped with access devices for persons with reduced mobility, which can simply and reliably adapt to the different sized gaps between the side edge of the vehicle and the platform. The invention also aims to propose a transport vehicle as described, in which the aforementioned access devices can be automated, nevertheless without having to resort of a complex device to guide the vehicle.

To this end, it has as its object a transport vehicle, particularly a bus or a trolleybus, including a chassis mounted on at least one axle joined to bearing devices, notably wheels with rubber tyres, as well as at least one access device, allowing persons with reduced mobility to access the vehicle, this access device being able to be moved from the chassis between an open or displaced position, in which this access device is placed alongside a platform, and a retracted position, in which said access device is retracted in relation to the vehicle's chassis, also including at least one displacement system for the or for each access device, said displacement system being filled with a gas, in particular with air, and being mobile in the manner of a bellows between an unfolded and a folded position, this displacement system being, moreover, joined to the access device so that, in its unfolded position, the displacement system arranges the access device in its opened position and, in its folded position, the displacement system arranges the access device in its retracted position, characterised in that the access device is formed by one side of the displacement system.

According to other characteristics of the invention, it may include one or more of the following:
- the side of the displacement system, which forms the access device, is mobile in an essentially rotational movement in relation to the chassis, around a longitudinal axis of same, like a fan;
- it includes return mechanisms, specifically elastic ones, able to return the displacement system to its folded position;
- it includes activation mechanism for the displacement system;
- the activation mechanism for the displacement system are pneumatic activation mechanisms, able to supply the interior volume of the displacement system with a pressurised gas;
- the pneumatic activation mechanisms include a reserve of pressurised air which is connected to the displacement system by means of a feeder, having a feed valve;
- it includes an exhaust device for the pressurised gas, outside the interior volume of the displacement system, in particular an exhaust line having an exhaust valve;
- the activation mechanisms of the displacement system include a jack, which has a body which is built in to the chassis, as well as a rod, which is mobile in relation to the body, which is built into the displacement system.

The invention will be better understood and other advantages of said invention will become clearer in the light of the following description of a method of realisation of a transport vehicle according to its principle, given purely by way of example and with reference to the annexed drawings, in which:
- figure 1 is a side view, illustrating a transport vehicle corresponding to the invention;
- figures 2 and 3 are, respectively, a view from behind and from the top, illustrating an access device for persons with reduced mobility, with which the vehicle in figure 1 is equipped, this access device being in its retracted position;
- figures 4 and 5 are respectively views from behind and from the top, similar to figures 2 and 3, illustrating the access device in its opened position;
- figures 6 and 7 are views from behind, similar to figures 2 and 4, illustrating a first embodiment of the access device for persons with reduced mobility, in its retracted and opened positions respectively; and
- figures 8 and 9 are views from behind, similar to figures 2 and 4, illustrating a second embodiment of the access device for persons with reduced mobility, in its retracted and opened positions respectively.

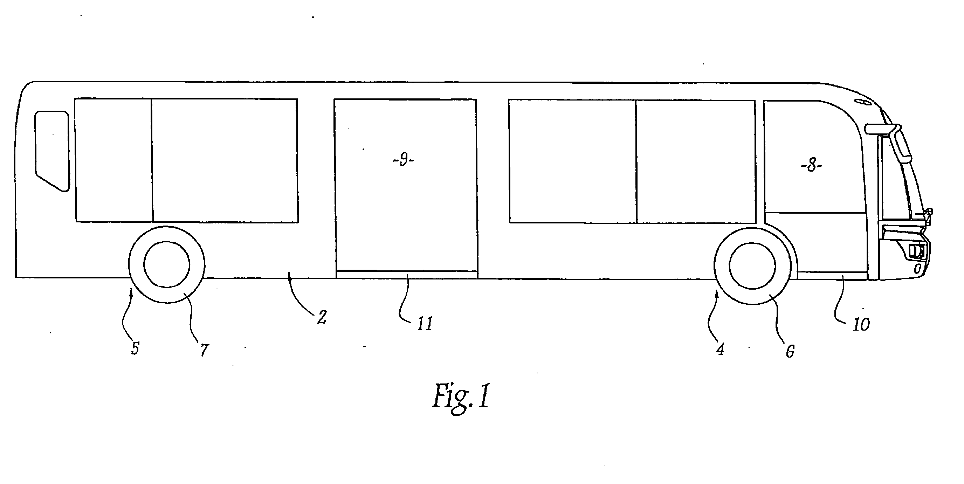

The transport vehicle illustrated in figure 1, which is a bus or a trolleybus, includes in a known manner a chassis 2, which is mounted on a front axle 4, as well as a rear axle 5. These two axles 4 and 5 are equipped with bearing devices which are wheels on rubber tyres, numbered 6 and 7 respectively. Typically, it also has a front door 8, as well as a rear door 9.

Two access devices 10 and 11, corresponding to this invention are included on the side of the vehicle, immediately below each door 8 and 9. Said access devices, which may be opened laterally, in other words perpendicularly to the surface of the page, shall be described in more detail below. Thus, in figure 1, they are shown schematically.

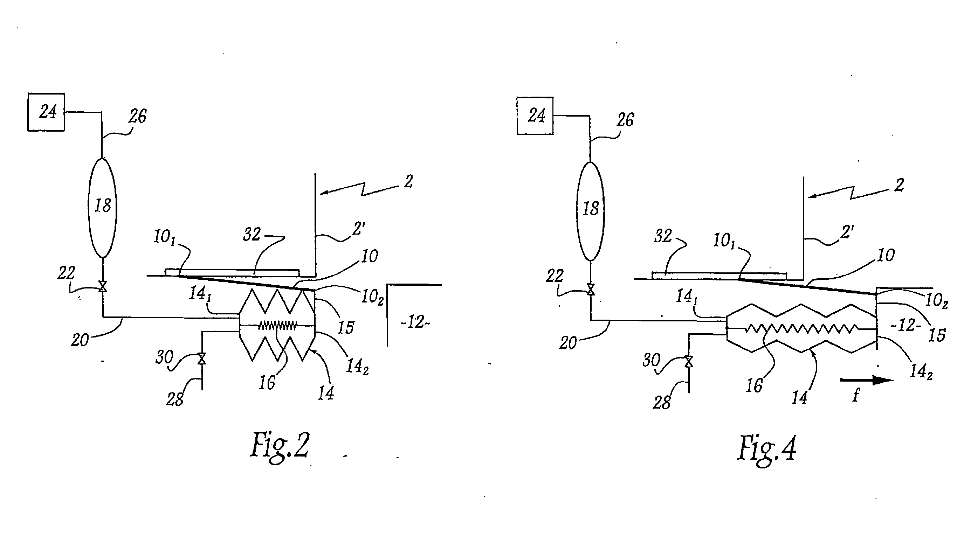

Figures 2 to 5 illustrate, on a larger scale and from two different angles to that in figure 1, the access device 10 which is connected to the forward door 8. However, the other access device 11 is in every way similar to that numbered 10 which shall now be described.

Figures 2 to 5 show the chassis 2, of which the side edge has been numbered 2'. Normally, the vehicle is placed alongside a platform 12, when it makes a scheduled stop. The access device is a ramp 10, mobile in relation to the chassis as shall be demonstrated below.

There is also a bellows 14, allowing the access device to open out, which has collapsible walls like an accordion. It has, firstly, an interior edge 14₁, which is fixed to the chassis, as well as an exterior edge 14₂, which is suitable to move laterally in the direction of the platform 12. It also has a return spring 16, which extends between the two aforementioned edges 14₁ and 14₂.

The bellows 14 is joined to a reserve of compressed air 18, by means of a feeder 20 equipped with a feed valve 22. This reserve of compressed air, which forms a source of energy suitable for this vehicle, is for example powered in the typical manner by the vehicle's Diesel engine.

Said reserve 18 is also connected to a control device 24, through a control line 26. As we shall see below, this control device is activated when the doors open and close. Finally, the bellows 14 is equipped with an exhaust line 28, connected to an exhaust valve 30.

The access ramp 10 is mounted, at the point of its inner end 10₁, on a slide guide 32 which is shown schematically, and which is built in to the chassis 2. Moreover, said ramp 10 is mounted, at its outer end 10₂, on an end plate 15, which is placed near the outer edge 14₂ of the bellows 14.

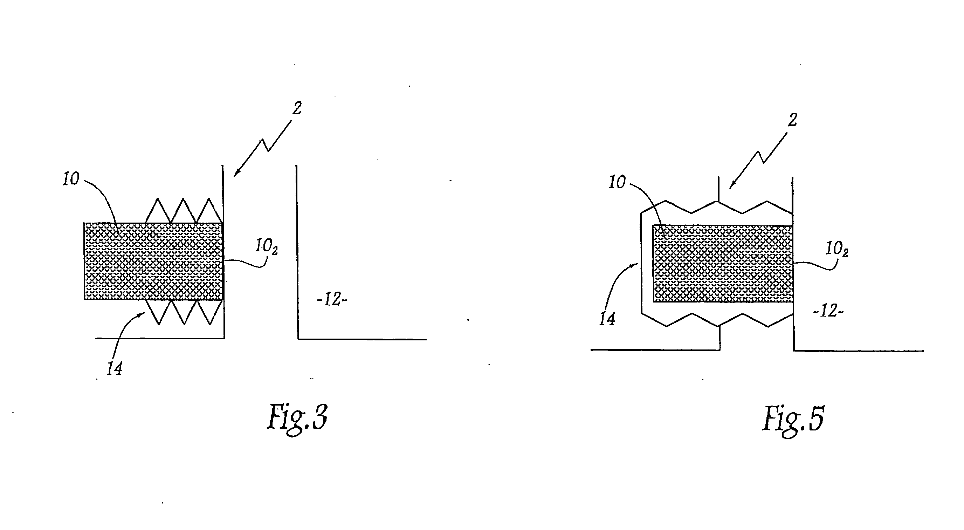

When the transport vehicle corresponding to this invention moves between two stops, the access ramp 10 is in its retracted position, illustrated in figures 2 and 3. Also, the bellows 14 is folded in, so that its outer edge 14₂ does not protrude beyond the side 2' of the chassis 2. The same goes for the outer end 10₂ of the access ramp 10.

When the vehicle arrives at the stop or station, the various doors are opened as usual. This opening then triggers the activation of the control device 24, which leads to the feed valve 22 opening, so that the compressed air that is initially contained in the reserve 18 penetrates into the inside space of the bellows 14.

This leads to the latter opening out, according to arrow f, so that its outer edge 14₂ comes to a stop against the platform 12. In this respect, note that its coming to a stop is allowed by the very nature of the bellows, which allows a "soft" shock. As an alternative, there could be a sensor, not shown, that detects how close the platform is so as to stop the bellows from opening any further.

When the bellows 14 is set in motion, this induces the access ramp 10 to travel at the same time along the slide guide 32. As a result, the outer end 10₂ of said ramp 10 moves until it is alongside the platform 12. When this ramp 10 is in its open position, illustrated in figures 4 and 5, persons with reduced mobility can easily move along the ramp so that they can enter the vehicle. Also note that the characteristics of the bellows 14 mean it can come sufficiently close to the platform 12 to allow the ramp 10 to fit precisely into place, nevertheless without risking a mechanical breakage.

Then, once the various passengers have got onto the vehicle, or alighted from it, the doors are shut as usual. Automatically, the exhaust valve 30 opens, so that the air that was initially pressurised in the bellows 14 is evacuated through the exhaust line 28.

In such conditions, the presence of the return spring 16 tends to return the outer edge 14₂ of the bellows 14 to its retracted position, which is that shown in figures 2 and 3. Note, however, that the return of said bellows 14 is enabled, not due to an added spring but due to the prestress of the walls of the bellows.

The return of the bellows 14 to its folded position also causes the ramp 10 to move to its initial retracted position. Then, the vehicle leaves the stop, without disturbing the exterior environment, since the ramp 10 and the bellows 14 are in a retracted position in relation to the vehicle chassis.

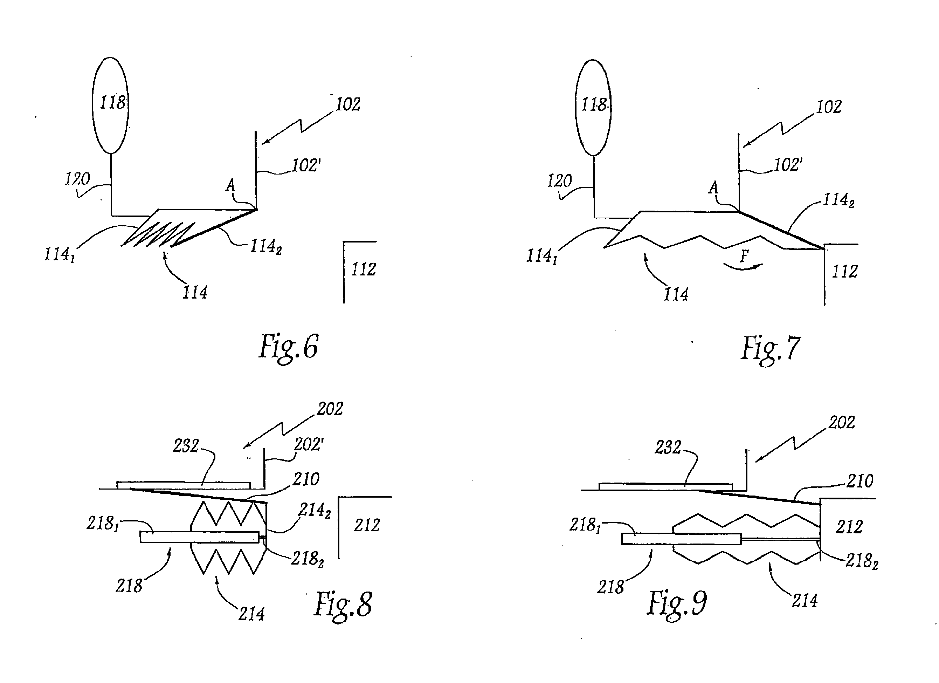

Figures 6 and 7 illustrate a first embodiment of the invention. In these drawings, the mechanical elements that are the same as those in figures 2 to 5 have been given the same reference numbers but increased by 100.

The bellows 114 illustrated in figures 6 and 7 can be opened out in the manner of a fan. More precisely, it has an inner edge 114₁ which is fixed to the chassis 102, as well as an outer edge 114₂ which is mobile, not in a translatory direction, but roughly in a rotational movement (see arrow F on figure 7) around an axis A, which extends longitudinally in relation to the chassis.

Note that, in the unfolded position in figures 7, the outer edge 114₂ of the bellows 114 forms the access ramp, along which persons with reduced mobility can move. In other words, this embodiment does not use an access ramp that is separate from the activating bellows, as in the example shown in figures 2 to 5.

Figure 8 to 9 illustrate a second embodiment of the invention. In these drawings, the mechanical elements that are the same as those in figures 2 to 5 have been given the same reference numbers but increased by 200.

In said figures 8 and 9, there is again a ramp 210 and a bellows 214, which are identical to those in figures 2 to 5. However, unlike this first embodiment, the opening of the bellows 214 is ensured by a jack 218, with a classic structure, which could be for example hydraulic or pneumatic.

More precisely, said jack 218 has a body 218₁ which is fixed to the chassis 202, as well as a rod 218₂ which is joined in proximity to the side of the outer edge 214₂ of the bellows 214. Consequently, when the vehicle makes a stop, the rod 218₂ moves into its extended position, so that it brings the bellows 214 to its unfolded position, as the ramp 210 to its open position. Then, before the vehicle leaves the stop, the rod 218₂ is retracted so that it stows away the bellows and the access ramp.

The invention makes it possible to achieve the objectives mentioned above.

Indeed, the nature of the activation bellows which is filled with gas gives it a satisfactory resistance to mechanical shocks. Thus, when it moves, the bellows is likely to be deformed, or even to rebound against the platform, without however being subject to mechanical breakage.

Consequently, it is possible to put this bellows into action, whatever the lateral gap separating the vehicle from the platform may be, during different station stops. This should be compared with the prior art, in which the access ramp has a fixed geometry and, consequently, in which the gap has to have a precise measurement, for the ramp to open out.

We therefore find that, thanks to this invention, it is possible to automate the movements of the access device, without them requiring the intervention of the driver, as in the prior art. This automation is advantageous as it makes it possible to substantially reduce the stopping time of the vehicle when it makes scheduled stops.

Note also that the invention can also be used without requiring a guiding function in the vehicle. Otherwise, should this function be activated, the guiding system need not necessarily be precise and, as a result, would involve low costs.

## Claims

1. Transport vehicle, notably a bus or trolleybus, including a chassis (2; 102; 202;) resting on at least one axle (4,5) joined to bearing devices, notably wheels (6, 7) mounted on rubber tyres, as well as at least one access device (10; 114₂; 210), allows persons with reduced mobility to access the vehicle, said access device being likely to be moved in relation to the chassis between an open position in which said access device is in proximity to a platform (12; 112; 212), and a retracted position, in which said access device is retracted beneath the vehicle chassis, also including at least one displacement system (14; 114; 214) for the or for each access device (10; 114₂; 210), said displacement system being filled with a gas, in particular air, and being mobile in the manner of a bellows between a folded position and an unfolded position, said displacement system (14; 114; 21-4) being, furthermore, joined to the access device (10; 114₂; 210) in such a way that, in its unfolded position, the displacement system arranges the access device into its opened position and, in its folded position, the displacement system arranges the access device retracted position,
**characterised in that** the access device is formed by one side (114₂) of the aforementioned displacement system (114).

2. Transport vehicle according to claim 1, **characterised in that** said side of the displacement system (114), forming the access device (114₂), is mobile in a roughly rotational direction in relation to the chassis (102), around a longitudinal axis (A) of same, like a fan.

3. Transport vehicle according to any one of the previous claims, **characterised in that** it is equipped with return mechanisms, in particular elastic ones (16), suitable to return the displacement system towards its folded position.

4. Transport vehicle according to any one of the previous claims, **characterised in that** it is equipped with means (18; 118; 218) for activating the displacement system.

5. Transport vehicle according to claim 4, **characterised in that** the means for activating the displacement system are pneumatic activation devices (18; 118), suitable for supplying the inside of the displacement system with a pressurised gas.

6. Transport vehicle according to claim 5, **characterised in that** the pneumatic activation devices include a reserve of pressurised air (18; 118) which is joined to the displacement system (14; 114), by means of a feeder (20; 120), equipped with a feeder valve (22).

7. Transport vehicle according to claim 6, **characterised in that** it is -equipped with an exhaust system for the pressurised gas, outside the interior space of the displacement system (14; 114), in particular an exhaust line (28) having an exhaust valve (30).

8. Transport vehicle according to claim 4, **characterised in that** the means for activating the displacement system (214) include a jack (218), which has a body (218₁) joined to the chassis (202), as well as a rod (218₂), which is mobile in relation to the body, and is joined to the displacement system (214).

## Patentansprüche

1. Transportfahrzeug, insbesondere ein Bus oder ein Oberleitungsbus, welches umfasst: ein Chassis (2, 102, 202), das auf mindestens einer Achse (4, 5) lagert, welche mit tragenden Vorrichtungen, insbesondere Rädern (6, 7) mit darauf montierten Gummireifen, verbunden ist, sowie mindestens eine Zugangsvorrichtung (10, 114₂, 210), welche Personen mit eingeschränkter Beweglichkeit den Zugang zu diesem Fahrzeug ermöglicht, wobei die genannte Zugangsvorrichtung relativ zum Chassis bewegt werden kann zwischen einer ausgefahrenen Stellung, in welcher die genannte Zugangsvorrichtung sich in der Nähe einer Straßen- oder Bordsteinkante (12, 112, 212) befindet, und einer eingefahrenen Stellung, in welcher die genannte Zugangsvorrichtung unter das Fahrzeugchassis zurückgefahren ist; und welches auch mindestens ein Verschiebesystem (14, 114, 214) für die oder für jede Zugangsvorrichtung (10, 114₂, 210) aufweist, wobei das genannte Verschiebesystem mit einem Gas, insbesondere mit Luft, gefüllt ist und in der Art eines Balges zwischen einem gefalteten Zustand und einem geöffneten Zustand beweglich ist, wobei außerdem das genannte Verschiebesystem (14, 114, 214) mit der Zugangsvorrichtung (10, 114₂, 210) dergestalt verbunden ist, dass dieses Verschiebesystem in seinem geöffneten Zustand die Zugangsvorrichtung in ihre ausgefahrene Stellung bringt und in seinem gefalteten Zustand die Zugangsvorrichtung in ihre eingefahrene Stellung bringt,
**dadurch gekennzeichnet, dass** die Zugangsvorrichtung durch eine Seite (114₂) des vorerwähnten Verschiebesystems (114) gebildet wird.

2. Transportfahrzeug nach Anspruch 1, **dadurch gekennzeichnet, dass** die genannte Seite des Verschiebesystems (114), welche die Zugangsvorrichtung (114₂) bildet, gegenüber dem Chassis (102) ähnlich wie ein Fächer in einer grob drehenden Richtung um eine Längsachse (A) desselben beweglich ist.

3. Transportfahrzeug nach irgend einem der vorangehenden Ansprüche, **dadurch gekennzeichnet, dass** es mit Rückführmechanismen, insbesondere mit elastischen Rückführmitteln (16), ausgestattet ist, welche geeignet sind, das Verschiebesystem in seinen gefalteten Zustand zurück zu führen.

4. Transportfahrzeug nach irgend einem der vorangehenden Ansprüche, **dadurch gekennzeichnet, dass** es mit Mitteln (18, 118, 218) zur Betätigung des Verschiebesystems ausgestattet ist.

5. Transportfahrzeug nach Anspruch 4, **dadurch gekennzeichnet, dass** die Mittel zur Betätigung des Verschiebesystems pneumatische Betätigungsvorrichtungen (18, 118) sind, die geeignet sind, das Innere des Verschiebesystems mit einem unter Druck stehenden Gas zu versorgen.

6. Transportfahrzeug nach Anspruch 5, **dadurch gekennzeichnet, dass** die pneumatischen Betätigungsvorrichtungen einen Vorratsbehälter für Druckluft (18, 118) aufweisen, welcher mit dem Verschiebesystem (14, 114) mit Hilfe einer mit einem Dosierventil (22) ausgestatteten Dosiervorrichtung (20, 120) verbunden ist.

7. Transportfahrzeug nach Anspruch 6, **dadurch gekennzeichnet, dass** es außerhalb des Innenraumes des Verschiebesystems (14, 114) mit einem Entlüftungssystem für das unter Druck stehende Gas ausgestattet ist, insbesondere mit einer Entlüftungsleitung (28), die ein Entlüftungsventil (30) aufweist.

8. Transportfahrzeug nach Anspruch 4, **dadurch gekennzeichnet, dass** zu den Mitteln zur Betätigung des Verschiebesystems (214) eine Winde (218) gehört, welche einen Körper (218₁) aufweist, der mit dem Chassis (202) verbunden ist, sowie einen Stab (218₂), welcher gegenüber diesem Körper beweglich ist und mit dem Verschiebesystem (214) verbunden ist.

## Revendications

1. Véhicule de transport, notamment un bus ou un trolleybus, incluant un châssis (2 ; 102 ; 202) en appui sur au moins un essieu (4, 5) relié à des dispositifs porteurs, notamment des roues (6, 7) montées sur des pneumatiques en caoutchouc, ainsi qu'au moins un dispositif d'accès (10 ; 114₂ ; 210), permettant à des personnes à mobilité réduite d'accéder au véhicule, ledit dispositif d'accès étant susceptible d'être déplacé par rapport au châssis entre une position ouverte dans laquelle ledit dispositif d'accès est à proximité d'une plate-forme (12 ; 112 ; 212), et une position rétractée, dans laquelle ledit dispositif d'accès est rétracté sous le châssis de véhicule, incluant également au moins un système de déplacement (14 ; 114 ; 214) pour le ou pour chaque dispositif d'accès (10 ; 114₂ ; 210), ledit système de déplacement étant rempli d'un gaz, en particulier de l'air, et étant mobile à la manière d'un soufflet entre une position pliée et une position dépliée, ledit système de déplacement (14 ; 114 ; 214) étant, de plus, relié au dispositif d'accès (10 ; 114₂ ; 210) de manière à ce que, dans sa position dépliée, le système de déplacement agence le dispositif d'accès dans sa position ouverte et, dans sa position pliée, le système de déplacement agence le dispositif d'accès en position rétractée,
**caractérisé en ce que** le dispositif d'accès est formé par un côté (114₂) du système de déplacement (114) susmentionné.

2. Véhicule de transport selon la revendication 1, **caractérisé en ce que** ledit côté du système de déplacement (114), formant le dispositif d'accès (114₂), est mobile dans une direction approximativement de rotation par rapport au châssis (102), autour d'un axe longitudinal (A) de celui-ci, comme un éventail.

3. Véhicule de transport selon l'une quelconque des revendications précédentes, **caractérisé en ce qu'**il est équipé de mécanismes de rappel, en particulier élastiques (16), adaptés pour ramener le système de déplacement vers sa position pliée.

4. Véhicule de transport selon l'une quelconque des revendications précédentes, **caractérisé en ce qu'**il est équipé de moyens (18 ; 118 ; 218) pour activer le système de déplacement.

5. Véhicule de transport selon la revendication 4, **caractérisé en ce que** les moyens pour activer le système de déplacement sont des dispositifs d'activation pneumatiques (18 ; 118), adaptés pour alimenter l'intérieur du système de déplacement avec un gaz pressurisé.

6. Véhicule de transport selon la revendication 5, **caractérisé en ce que** les dispositifs d'activation pneumatiques incluent une réserve d'air pressurisé (18 ; 118) qui est reliée au système de déplacement (14 ; 114), au moyen d'un dispositif d'alimentation (20 ; 120), équipé d'une soupape d'alimentation (22).

7. Véhicule de transport selon la revendication 6, **caractérisé en ce qu'**il est équipé d'un système d'échappement pour le gaz pressurisé, à l'extérieur de l'espace intérieur du système de déplacement (14 ; 114), en particulier une ligne d'échappement (28) ayant une soupape d'échappement (30).

8. Véhicule de transport selon la revendication 4, **caractérisé en ce que** les moyens pour activer le système de déplacement (214) incluent un vérin (218), qui a un corps (218₁) relié au châssis (202), ainsi qu'une tige (218₂), qui est mobile par rapport au corps, et est reliée au système de déplacement (214).
